(19) Europäisches Patentamt / European Patent Office / Office européen des brevets

(11) **EP 3 793 081 B1**

(12) **EUROPEAN PATENT SPECIFICATION**

(45) Date of publication and mention
of the grant of the patent:
**28.05.2025 Bulletin 2025/22**

(21) Application number: **19214917.7**

(22) Date of filing: **10.12.2019**

(51) International Patent Classification (IPC):
*H02P 21/13* (2006.01)    *H02P 21/14* (2016.01)
*H02P 6/08* (2016.01)    *H02P 6/17* (2016.01)
*H02P 21/00* (2016.01)    *F42B 10/62* (2006.01)
*F42B 10/00* (2006.01)

(52) Cooperative Patent Classification (CPC):
**H02P 21/13; H02P 6/08; H02P 6/17; H02P 21/0003; H02P 21/14;** F42B 10/62; H02P 6/28

(54) **VARIABLE BANDWIDTH ACTUATOR CONTROLLER**

AKTUATORSTEUERUNG MIT VARIABLER BANDBREITE

ORGANE DE COMMANDE D'ACTIONNEUR À LARGEUR DE BANDE VARIABLE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **10.09.2019 US 201916566421**

(43) Date of publication of application:
**17.03.2021 Bulletin 2021/11**

(73) Proprietor: **Simmonds Precision Products, Inc.
Vergennes, VT 05491 (US)**

(72) Inventors:
• HULL, Richard Art
  **Kissimmee, FL 34744 (US)**
• FRANZ, Paul Martin
  **Shelburne, VT 05482 (US)**

(74) Representative: **Dehns
10 Old Bailey
London EC4M 7NG (GB)**

(56) References cited:
US-A1- 2016 134 213    US-A1- 2018 262 144
US-A1- 2019 229 653    US-B2- 6 667 597

**Description**

**BACKGROUND**

**1. Field of the Disclosure**

The present disclosure relates to an actuator controller and more particularly, to a controller that provides variable bandwidth to an actuation system

**2. Description of Related Art**

Electric driven motors are used in a wide variety of applications including both commercial and military applications. A motor is used to drive a movable mechanism, also referred to as a load, by applying a transmission force, which can be linear force or a torque. The motor receives energy from an electric voltage source such as a battery or generator, and provides a transmission force (linear or torque), to move the mechanism. The motor receives position commands from an external system controller and reports back estimates of updated mechanism position and angular rate as the mechanism is moved. The mechanism itself may be subject to external loading forces or torques, which may be constant, or vary linearly or nonlinearly with deflection of the mechanism or with external factors such as situational or environmental conditions. External loading forces, including friction and inductive resistance, or back electromotive force (EMF), associated with movement of the mechanism in turn cause a reaction torque which counteracts the motor's transmission force.

In a proportional-integral-derivative (PID) feedback control design, the motor's control system is unaware of the reaction torque. Gains applied by the motor's control system for actuating the mechanism are designed to be high enough to overcome a worst-case reaction torque while maintaining minimum performance standards. Bandwidth, which is defined as the frequency at which the gain of the closed loop input-output response is relative to, e.g., 3dB down from, the steady state value and is related to the reciprocal of response time, is maintained high at a fixed value that can meet response requirements for a worst-case reaction torque. Such a high fixed-bandwidth system may be overly responsive and inefficient with respect to power consumption.

While conventional methods and systems have generally been considered satisfactory for their intended purpose. US 2018/262144 relates to a motor drive controller. US 2019/229653 relates to a sensor-less control of an electric motor. US 2016/134213 relates to an estimation system for rotor information.

**SUMMARY**

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, a method is provided for controlling a motor for moving a load. The method is defined in claim 1 and includes receiving a selected bandwidth, wherein bandwidth is related to the reciprocal of response time, receiving a command to move the load to a selected position, receiving a feedback of measured motor position, estimating reaction torque or force associated with moving the load in real time, and estimating rotational motor speed and motor position. The method further includes calculating gains for controlling position of the load as a function of the selected bandwidth, wherein in the gain represents an adjustment of at least one of the estimated motor position, motor rotational speed, and reaction torque. The method further includes determining a drive signal to apply to the motor as a function of the estimated reaction torque, the estimated rotational motor speed, the estimated motor position, the gains and the selected position and transmitting the drive signal to the motor to move the load.

In another aspect, a controller for a motor configured to move a load is provided. The controller is defined in claim 6 and includes a processing device configured to receive a selected bandwidth, wherein bandwidth is related to the reciprocal of response time, receiving a command to move the load to a selected position, receive a feedback of measured motor position, estimate reaction torque or force associated with moving the load in real time, and estimate rotational motor speed and motor position. The processing device is further configured to calculate gains for controlling position of the load as a function of the selected bandwidth, wherein in the gains represents an adjustment of at least one of the estimated motor position, motor rotational speed, and reaction torque. The processing device is further configured to determine a drive signal to apply to the motor as a function of the estimated reaction torque, the estimated rotational motor speed, the estimated motor position, the gain and the selected position and transmit the drive signal to the motor to move the load.

## BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

FIG. 1 is a block diagram of an actuator system in accordance with embodiments of the disclosure;
FIG. 2 is a block diagram of a controller of the actuator system shown in FIG. 1;
FIG. 3 is a schematic diagram of a load position controller of the controller shown in FIG. 2;
FIG. 4 is a schematic diagram of a high gain observer of the controller shown in FIG. 2;
FIG. 5 is a flowchart of an example method performed by a controller of an actuator system in accordance with an embodiment of the disclosure; and
FIG. 6 is a block diagram of an exemplary computer system configured to implement components of a controller of FIGS. 2-4.

## DETAILED DESCRIPTION OF THE EMBODIMENTS

The illustrated embodiments are now described more fully with reference to the accompanying drawings wherein like reference numerals identify similar structural/functional features. The illustrated embodiments are not limited in any way to what is illustrated, as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this present disclosure belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

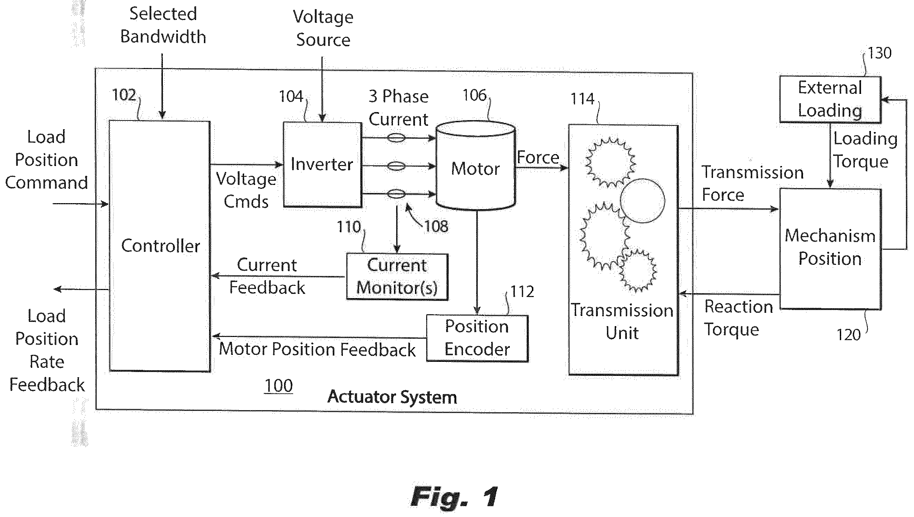

Turning now descriptively to the drawings, in which similar reference characters denote similar elements throughout the several views, FIG. 1 depicts an exemplary actuator system 100 in which below illustrated embodiments may be implemented. Actuator system 100 includes an actuator controller 102 that is configured to allow user or automated selection of bandwidth or response time of the actuator system 100 during operation. The selected bandwidth can be provided, for example by an external system controller (not shown). Bandwidth is related to the reciprocal of response time, and each reference to bandwidth encompasses reference to response time.

The actuator controller 102 estimates in real time a reaction torque input to the actuator system 100 by a mechanism 120 (also referred to as load). The reaction torque includes a loading torque applied to the mechanism 120 by external loading 130. The actuator controller 102 decouples bandwidth requirements from requirements for responding on conditions when the reaction torque is at a maximum value, such as due to large external loading 130. This decoupling allows for optimization of energy consumption during operation by allowing for selection of a bandwidth to match response needs as well as expected reaction torque or estimated reaction torque. This decoupling further provides robustness to disturbances that can cause unexpected external loading torques.

In an example scenario, the actuator system 100 is included in an airborne system, such as an aircraft or missile, or guided projectile. Mechanism 120 is a control surface on the airborne system, such as a fin, canard, stabilator, flap, aileron, rudder, elevator, or other device that can be moved by a motor 106 of the actuator system 100, such as a landing gear. The actuator system 100 can be included within an airborne, waterborne, land borne, or subterranean system, such as a vehicle or pump, without limitation. When the mechanism is moved, its position is changed at a rate of position change. When being moved, the mechanism can be subjected to an external loading force. The loading force can be, for example, friction, air resistance, water resistance, etc. The external loading forces can include external loading torques, which may be constant, or vary linearly with deflection of the mechanism. The external loads 130 may also be nonlinear or vary with external factors, for example flight condition. An example of an external load 130 that is affected by external factors for an example aircraft or missile control surface mechanism 120 is a hinge moment loading which is affected by Mach number, dynamic pressure, airframe angle of attack and sideslip, as well as control surface deflection. External loads 130 applied to the mechanism 120 in turn cause a reaction torque which must be overcome by transmission force applied to the mechanism 120 by the actuator system 100.

Controller 102 receives load position commands and selected bandwidth from one or more external system controllers, such as an autopilot or a user interface. Actuator controller 102 further reports feedback to the one or more external system controllers. The feedback includes estimates of the motor position and motor rotational rate. An inverter 104 of actuator system 100 receives energy from an electric voltage source (not shown), such as a battery or generator. Motor 106 receives current signals from inverter 104 and converts the current signals into a mechanical force, which is applied to a transmission unit 114. Transmission unit 114 can provide a gear to move the mechanism 120. Transmission unit 114 relates a position of mechanism 120 to the position of motor 106, such as through a gear ratio, 1/N. Mechanism 120 applies a load reaction torque to the transmission unit 114, wherein the load reaction torque is a reaction to a loading torque applied to the mechanism 120 by external loading 130. The transmission force applied by transmission unit 114 is configured to be sufficient to compensate for the load reaction torque applied by mechanism 120.

Actuator system 100 includes current sensors 108 and one or more current monitors 110 to measure and monitor each phase of current output by inverter 104. Output of the current monitors 110 is provided to the actuator controller 102 as current feedback. Actuator system 100 further includes a position encoder configured to measure motor position, e.g., in terms of angular rotation or linear translation. Output of the position encoder 112 is provided to actuator controller 102 as motor position feedback.

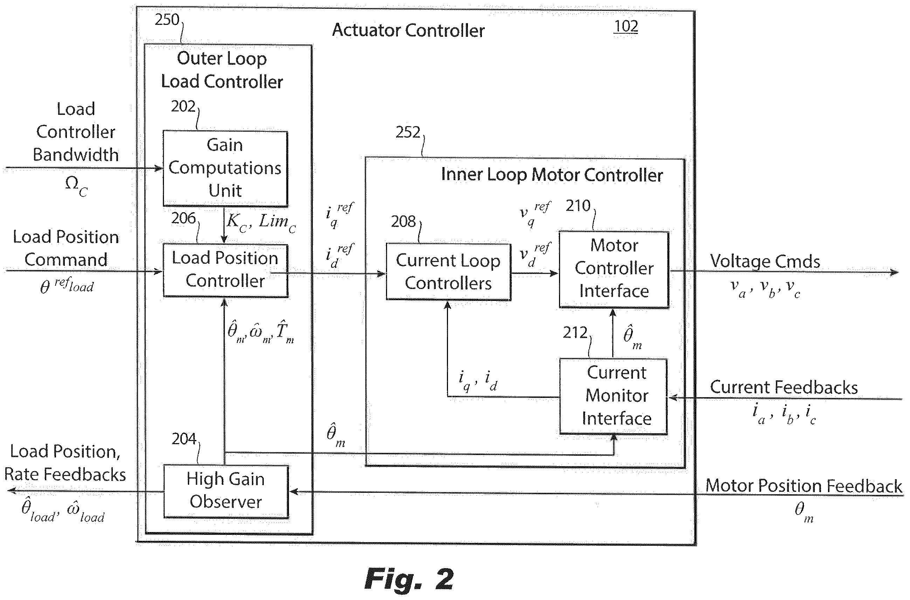

FIG. 2 shows actuator controller 102, which includes an outer loop load controller 250 and an inner loop motor controller 252. The outer loop fin controller 250 includes a gain computations module 202, a high gain observer 204, and a load position controller module 206. The embodiments of this disclosure are directed to the design and implementation of outer loop load controller 250. The inner loop motor controller 252 includes a current loop controller module 208 a motor controller interface 210, and a current monitor interface 212. The inner loop motor controller 252, though necessary to the operation of the actuator system 100, is not restricted to a specific configuration. The configuration of inner loop motor controller 252 shown and described is provided by way of example, whereas other configurations known in the art could be used.

Gain computation module 202, described in greater detail below, receives a selectable load controller bandwidth $\Omega_C$ (also referred to as command bandwidth) and outputs command gain $K_c$ and limit $Llim_c$, $Ulim_c$ values to the load position controller 206. The actuator controller 102 receives the command bandwidth as an input selectable value or as a software setting of the actuator controller 102. The command bandwidth can be set by an administrator or from one or more external load controllers (not shown) that can modify the command bandwidth during operation in response to a condition, such as a sensed condition or at different phases of or times during an operation.

The inner loop motor controller 252, is shown with reference to a conventional d-q motor current model. With reference to the inner loop motor controller 252, the current monitor interface 212 receives current feedback $i_a$, $i_b$, $i_c$ as measured at the motor (motor 106 as shown in FIG. 1).

Current loop controllers 208 include traditional proportional-integral (PI) controllers that produce outputs voltage vectors $v_d^{ref}$ and $v_q^{ref}$. Motor controller interface 210 rotates the voltage vectors $v_d^{ref}$ and $v_q^{ref}$ into the stationary reference frame using $\hat{\theta}_m$ (provided by the high gain observer 104) as a transformation angle to obtain quadrature voltage values, $V\alpha$ and $V\beta$, and mathematically transforms $V\alpha$ and $V\beta$ into three phase-voltages $v_a$, $v_b$, $v_c$, which are output to the motor 106, e.g., via inverter 104.

With reference to outer loop 250, high gain observer 204 receives motor position feedback $\theta_m$ as measured at the motor (e.g., by a sensor, such as an optical encoder or Hall effects sensor, estimates motor positon $\hat{\theta}_m$ motor speed $\hat{\omega}_m$, and load reaction torque $\hat{T}_m$. The high gain observer 204 provides the estimated motor positon $\hat{\theta}_m$ motor rotation rate $\hat{\omega}_m$, and load reaction torque $\hat{T}_m$ to the load position controller 206, the estimated motor positon $\hat{\theta}_m$ to the motor controller interface 210 and the current monitor interface 212, and the estimated load positon $\hat{\theta}_{load}$ and load rotation rate $\hat{\omega}_{load}$ to the external system controller. The load position controller 206 receives a load position command $\theta^{ref}_{load}$ that it uses to determine reference current vectors $i_q^{ref}$, $i_d^{ref}$ as a function of estimated motor positon $\hat{\theta}_m$, motor speed $\hat{\omega}_m$, and load reaction torque $\hat{T}_m$. Reference current vectors $i_q^{ref}$, $i_d^{ref}$ are provided to the current controller module 208. The current loop controller module 208 and motor controller interface 210 operate as described above with respect to inner loop 252 to output $v_a$, $v_b$, $v_c$. to the motor 106 (shown in FIG. 1).

With reference to FIGS. 1 and 2, as described above, actuator controller 102 provides three features associated with the outer loop load controller 250 that operate together to decouple bandwidth requirements from requirements for maximum load reaction torque. The first feature is high gain observer 204 uses measurements of the motor position $\theta_m$ measured at motor 106 by encoder 112 and provides estimates of load reaction torque $\hat{T}_m$ as well as estimates of motor position $\hat{\theta}_m$ and motor rotation rate $\hat{\omega}_m$. The second features is application of a load position controller 206 that uses estimates of the load reaction torque $\hat{T}_m$, motor position and motor rotation rate to determine inner loop motor controller reference current vectors $i_q{}^{ref}, i_d{}^{ref}$. The third features is a gain computation module 202 that computes gains to apply to the load position controller 2064 as a function of a commanded actuator bandwidth.

It is envisioned that the externally supplied commanded bandwidth may be either fixed in software settings to provide motors of "selectable bandwidth," or may actually be modified during operation by an external system controller, to allow the motor to assume a different bandwidth response at different times or phases of system operation. The "selectable bandwidth" option could also be attractive to customers who would like to use the same motor part in different applications. The option to modify the bandwidth in real time could be very beneficial in applications where the response requirements change significantly during its operation, such as for a missile system during mid-course glide versus terminal maneuver. The ability to use a lower bandwidth when appropriate can lead to significant power savings, which can reduce battery size and/or electric generation requirements.

Due to the selectable bandwidth, the same actuator system 100 can be used for different applications. Additionally, since the selectable bandwidth can be modified during operation, e.g., in real time, bandwidth can be changed to accommodate different needs for response times at different phases of an operation. This can be illustrated by an example in which mechanism 120 is a control surface, such as a fin, on a missile. A lower bandwidth, which correlates to a slower response time, can be applied during a mid-course glide phase of missile flight whereas a higher bandwidth, faster response, may be required during the terminal maneuver phase of the missile flight. Power requirements can be reduced when bandwidths are reduced. The ability to use a lower bandwidth when appropriate can lead to significant power savings, which can reduce battery size and/or electric generation requirements.

An important feature of the actuator controller 102, is that the bandwidth requirements of actuator system 100 are decoupled from the maximum load reaction torque $\hat{T}_m$ requirements. This decoupling allows the selectable bandwidth to be lowered even when the mechanism 120 is subjected to relatively high external loading torques.

A further advantage of the ability of the actuator controller 102 to directly compensate for load reaction torque $\hat{T}_m$ is the ability of actuator system 100 to provide a consistent response as specified by the selected bandwidth independent of the external loading torque. This for example, could prevent or reduce asymmetric responses of missile or aircraft control surfaces that are experiencing different aerodynamic loading due to angle of attack or aerodynamic shading. The consistent responses provide more robust and predictable performance of the actuator system 100, which is important when combined with similar actuator systems to control a vehicle.

Another benefit is that the load reaction torque $\hat{T}_m$ that is estimated by the high gain observer 204 and compensated for in the load position controller 206 can further include disturbances due to parameter uncertainties. The estimation of and compensation for these uncertainties improves robustness of the actuator system 100 for responding to disturbances and modeling uncertainties.

Although an example application for controlling a fin mechanism is described, this is for illustrative purposes and in no way is intended to limit the scope of applications of the disclosure. Furthermore, in the example provided the transmission force applied to the fin of a missile was a rotational torque, the disclosure can encompass a transmission force that applies a linear force to the mechanism 120, wherein high gain observer 204 would still provide an estimate of a load reaction torque $\hat{T}_m$ applied at a shaft of motor 106.

Load position controller 206, variable bandwidth gain computations by gain computations 202, and high gain observer design 204 are now described in greater detail.

LOAD POSITION CONTROLLER DESIGN

For illustration purposes, load position controller 206 is described for an example electric motor actuation system 100 that drives a mechanism 120 for controlling a fin control surface on a missile or aircraft. In this case, the load position command $\theta^{ref_{load}}$ tracked by load position controller 206 is a fin position reference command. First, we assume that the fin position $\theta_{fin}$ can be related to the motor position $\theta_m$ through a gear ratio, N, by a simple algebraic product:

$$\theta_m = N\theta_{fin}$$

Commanded fin position is converted to a motor position command:

$$\theta_c = N\theta^{ref_{fin}}$$

Then, using simplified mechanical rotational equation of the electric motor:

$$\dot{\theta_m} = \omega$$

$$\dot{\omega} = -\left(\frac{B}{J}\right)\omega - \left(\frac{T}{J}\right) + \left(\frac{k_m}{J}\right)i_q$$

Where:

$\omega$ = rotational speed of motor (rad/s)

$B$ = motor viscous damping (Nm/(rad/s))

$J$ = motor inertia (kg m$^2$)

$T$ = reaction torque from load (Nm)

$k_m$ = motor electrical torque constant (Nm/A)

$i_q$ = motor driving current (A)

Assuming full state feedback and known external loading torque, a simple position feedback control law can be designed to make the system behave like a second order system with known bandwidth ($\Omega$) and damping ($\zeta$) about a commanded angular position ($\theta_C$):

$$\ddot{\theta} + 2\zeta\Omega\dot{\theta} + \Omega^2\left(\theta - \theta_C\right) = 0$$

Noting that $\ddot{\theta} = \dot{\omega}$ and $\dot{\theta} = \omega$ , the motor state equations can be equated to the desired bandwidth second order system:

$$-\left(\frac{B}{J}\right)\omega - \left(\frac{T}{J}\right) + \left(\frac{k_m}{J}\right)i_q = -2\zeta\Omega\omega - \Omega^2(\theta - \theta_c)$$

An equation for the load position controller 206 that can apply a desired bandwidth (denoted as $\Omega$) is found by solving for the input current, $i_q$, which becomes a reference signal to the current loop controller module 208 $i_q^{ref}$ :

$$i_q^{ref} = \left(\frac{B}{k_m} - \frac{2\zeta\Omega J}{k_m}\right)\omega - \left(\frac{J}{k_m}\right)\Omega^2(\theta - \theta_c) + \left(\frac{1}{k_m}\right)T$$

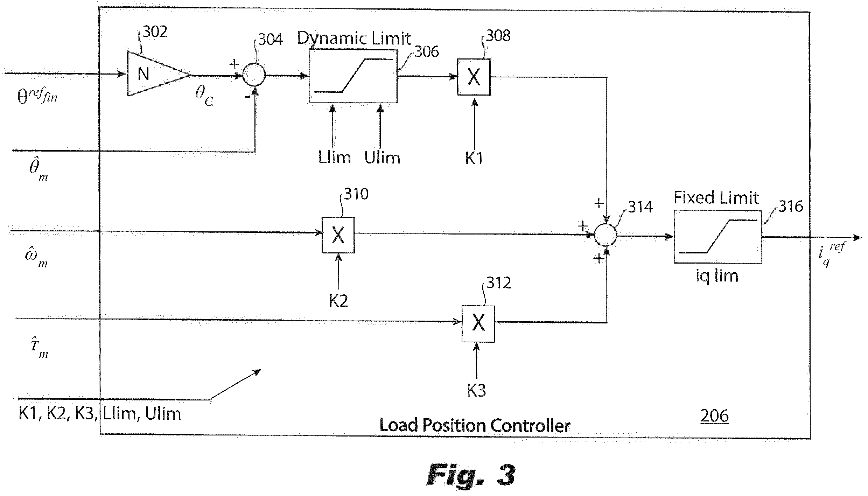

With reference to FIG. 3, a schematic diagram of the load position controller 206 is shown. Controller gains K1, K2, and K3 and saturation limits Llim and Ulim are provided as inputs as well as estimates of the motor position $\hat{\theta}_m$, motor speed $\hat{\omega}_m$, and load reaction torque $\hat{T}_m$, as shown and described with respect to FIG. 3, for a feedback control architecture. A dynamic limiter 306 is optionally used to limit the motor position error signal used in the controller, which in effect limits the maximum motor angular rate command. In addition a fixed limit on the output $i_q$ reference signal provides a current command limit to the current loop controller module 108 and prevents high gain peaking.

A gain multiplier 302 converts the fin position command $\theta^{reffin}$ to a motor position command $\theta_C$ by application of the constant gear ratio N of the transmission unit 114. Estimated motor position $\hat{\theta}_m$ is subtracted from the output of gain multipler 302 at adder 304. The output of adder 304 is optionally input to dynamic limiter 306 for applying dynamic limits Ulim and Llim. The output of dynamic limiter 306 is multiplied by first gain component K1 at multiplier 308. The output of multiplier 308 is provided to adder 314. Estimated motor speed $\hat{\omega}_m$ is multiplied by second gain component K2 at multiplier 310. The output of multiplier 310 is provided to adder 314. Estimated load reaction torque $\hat{T}_m$ is multiplied by third gain component K3 at multiplier 312. The output of multiplier 312 is provided to adder 314. The output of adder 314 can optionally be provided to a fixed limiter 316 for applying limit iq lim. The output of fixed limiter 316 is output as the $i_q$

reference signal $\dot{i}_q^{ref}$ .

VARIABLE BANDWIDTH GAIN COMPUTATIONS

Gain components K1, K2, K3 applied in FIG. 3 can be computed in real-time as a function of the selected bandwidth $\Omega_C$ input from an external device or user interface, such as via a higher level system controller, computed a periodically whenever the desired bandwidth changes, or computed once at system or software initialization of actuator system 100. The higher level system controller can be, for example an autopilot or a control augmentation system operated by a pilot. The gain computation module 202 calculates the gain components K1, K2, K3 based on the current reference equation in terms of the variable bandwidth ($\Omega_C$), desired damping ($\zeta$), and motor parameters defined previously:

$$K1 = \left(\frac{J}{k_m}\right)\Omega_C^{\ 2}$$

$$K2 = \left(\frac{B}{k_m} - \frac{2\zeta\Omega_C J}{k_m}\right)$$

$$K3 = \left(\frac{1}{k_m}\right)$$

The dynamic limits Llim and Ulim applied to the motor position error signal are also computed in the gain computation module 202 as a function of the selected bandwidth ($\Omega_C$) and damping ($\zeta$), to give a maximum motor angular rotation limit specified by $\omega_{m,max}$ in rad/s.

$$\text{Ulim} = \frac{\omega_{m,max}}{\zeta\Omega_C}$$

$$\text{Llim} = -\text{Ulim}$$

The fin controller gains and limits appear in vector form in FIG 2:

$$K_C = [K1 \quad K2 \quad K3]^T, \qquad Lim_C = [Ulim \quad Llim]^T$$

HIGH GAIN OBSERVER DESIGN

The load position controller 204 is designed to directly compensate for load reaction torque $\hat{T}_m$ in order to maintain a desired system bandwidth in the presence of time varying and uncertain external loading torque conditions. In many instances it is not feasible to have direct measurement of either the motor rotational speed or load reaction torque, such as in an inexpensive actuator system. In these instances, it is desirable to estimate the motor rotational speed and reaction torque from measurements of the motor rotational position. A measurement device, such as a Hall effects sensor or optical encoder, can be used to provide a direct measurement of the motor shaft rotational position, even without an independent measurement of the motor rotational speed.
High gain observer 204 can provide simultaneous estimates of the motor position, motor rate, and motor reaction torque for use by the load position controller 206, even when only the motor rotational position measurement is available. With a sufficiently high bandwidth for high gain observer 204, estimates for motor position, motor rate, and motor reaction torque can converge at a time scale that does not adversely influence robustness of the load position controller 206.
High gain observer 204 is configured with a state to represent load reaction torque in addition to states representing motor position and motor rate, wherein the load reaction torque can be assumed to be constant. State equations for the high gain observer 204 are provided as:

$$\dot{\theta}_m = \omega$$

$$\dot{\omega} = -\left(\frac{B}{J}\right)\omega - \left(\frac{T}{J}\right) + \left(\frac{k_m}{J}\right)i_q$$

$$\dot{T} = 0$$

Writing these equations in standard state space form, with $z = [\theta_m\ \omega\ T]^T$, $u = i_q$

$$\dot{z} = \underbrace{\begin{bmatrix} 0 & 1 & 0 \\ 0 & a_{22} & a_{23} \\ 0 & 0 & 0 \end{bmatrix}}_{A} z + \underbrace{\begin{bmatrix} 0 \\ b_2 \\ 0 \end{bmatrix}}_{B} i_q \qquad y = \underbrace{\begin{bmatrix} 1 & 0 & 0 \end{bmatrix}}_{C} z,$$

where

$$a_{22=} -\left(\frac{B}{J}\right) \quad , \quad a_{23} = -\left(\frac{1}{J}\right) \quad , \quad b_2 = \left(\frac{k_m}{J}\right)$$

Expansion of a Luenberger observer equation provides:

$$\dot{\hat{z}} = A\,\hat{z} + Bu + K_{ob}(y - C\hat{z}),$$

where

$$\hat{z} = \begin{bmatrix} \hat{\theta}_m & \hat{\omega} & \hat{T} \end{bmatrix}^T$$

re estimated state values calculated by the high gain observer 206.

Defining an observer gain matrix for a single input, single output (SISO) system:

$$K_{ob} = \begin{bmatrix} K_{ob1} \\ K_{ob2} \\ K_{ob3} \end{bmatrix}$$

A system matrix equation for the high gain observer 206 is:

$$\widehat{A} = A - K_{ob}C$$

$$\widehat{A} = \begin{bmatrix} -K_{ob1} & 1 & 0 \\ -K_{ob2} & a_{22} & a_{23} \\ -K_{ob3} & 0 & 0 \end{bmatrix}$$

A characteristic equation for the high gain observer 206 is found from:

$$\left|sI - \widehat{A}\right| = \left|\begin{bmatrix} s + K_{ob1} & -1 & 0 \\ K_{ob2} & s - a_{22} & -a_{23} \\ K_{ob3} & 0 & s \end{bmatrix}\right|,$$

where s is the Laplace operator and $I$ is the identity matrix. Expanding the determinant:

$$\left|s\mathbf{I} - \widehat{A}\right| = s^3 + (K_{ob1}-a_{22})s^2 + (K_{ob2}-K_{ob1}a_{22})s + K_{ob3}a_{23}$$

Equating the coefficients of the characteristic polynomial to those of a stable $3^{rd}$ order Butterworth polynomial with bandwidth W:

$$P_3 = s^3 + 2Ws^2 + 2W^2s + W^3$$

Solving for the gains of the high gain observer 204 in terms of the previously defined motor parameters and the desired bandwidth of the close loop high gain observer 204:

$$K_{ob1} = 2W + a_{22}$$

$$K_{ob2} = 2W^2 + 2Wa_{22} + a_{22}{}^2$$

$$K_{ob3} = \frac{1}{a_{23}} W^3$$

Equations for the high gain observer 204 are then written:

$$\dot{\widehat{\theta_m}} = \widehat{\omega} + K_{ob1}\left(\theta_m - \widehat{\theta_m}\right)$$

$$\dot{\widehat{\omega}} = a_{22}\widehat{\omega} + a_{23}\widehat{T} + b_2 i_q + K_{ob2}\left(\theta_m - \widehat{\theta_m}\right)$$

$$\dot{\widehat{T}} = K_{ob3}\left(\theta_m - \widehat{\theta_m}\right)$$

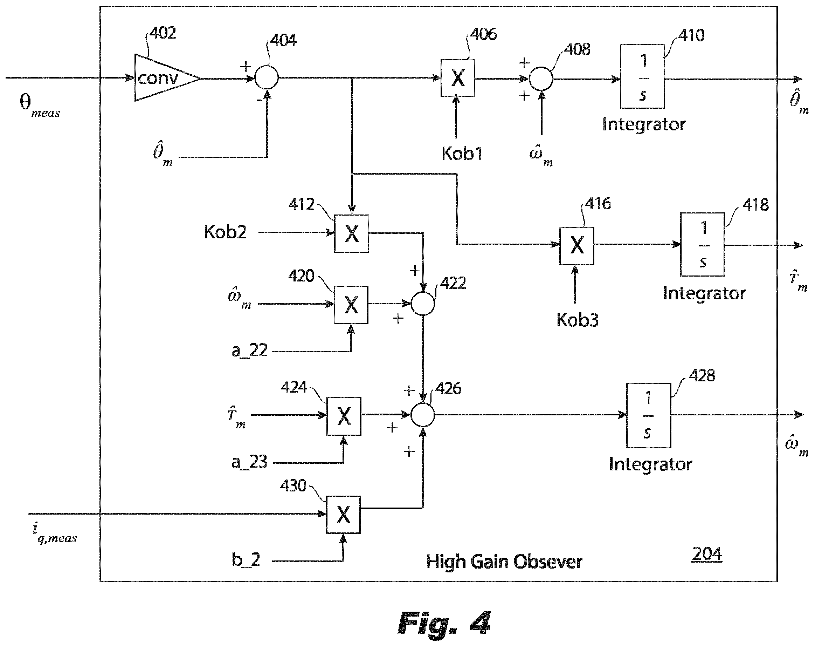

With reference to FIG. 4, a schematic diagram of the high gain observer 204 is shown, with observer gains ($K_{ob1}$, $K_{ob2}$, $K_{ob3}$) pre-calculated and stored in software. Bandwidth of the high gain observer 204 is a design consideration but should be sufficiently high to guarantee convergence of the estimates at the time scale needed by the outer loop controller, and yet sufficiently less than the bandwidth of the inner loop current controllers 208.

In one or more embodiments, the observer gains could also be calculated from the equations above in the software/firmware implementation of the gain computation module 102 and passed to the high gain observer 204. In this embodiment, bandwidth of the high gain observer 204 would also be supplied by a user interface.

The estimate of load response torque $\widehat{T}$ output by the high gain observer 204 includes not only the load reaction torque $\widehat{T}$ at the motor 206, but also includes an estimate of disturbance $\hat{\sigma}$, such as due to errors in estimates of one or more parameters:

$$\hat{\sigma} = (\alpha - \hat{\alpha})i_{q_{ref}} - (\gamma - \hat{\gamma})\omega + (\mu - \hat{\mu})i_q - \frac{1}{J}T_L$$

with:

$$\alpha = \left(\frac{k_m k_p}{J}\right) \quad , \gamma = \left(\frac{B}{J}\right), \quad \mu = \left(\frac{k_m}{J}\right)$$

Thus, cancellation of the estimated torque $\widehat{T}$ from the high gain observer 204 provides additional robustness to disturbances and uncertainty in the system.

Starting with block 402 of FIG. 4, measured motor position $\theta_{meas}$ is received at module 402. Module 402 converts the measurement of motor position from units of the measurement device 112 into continuous radians which increase/-decrease monotonically beyond +/- 2 pi. The difference between output of module 402 and estimated motor position $\hat{\theta}_m$ are determined at adder 404. The output of adder 404 is motor position error $\theta_{err}$ and is provided to multipliers 406, 412, and 416. At multiplier 406 the motor position error $\theta_{err}$ is combined with (e.g., multiplied by) first observer gain component Kob1.

**EP 3 793 081 B1**

The output of multiplier 406 is added to estimated motor speed $\hat{\omega}_m$ at adder 408. The output of adder 408 is integrated by integrator 410. The output of integrator 410 is output as updated estimated motor position $\hat{\theta}_m$, which is provided to the load position controller 206.

At multiplier 416, $\theta_{err}$ is combined with (e.g., multiplied by) third observer gain component Kob3. The output of adder 416 is integrated by integrator 418. The output of integrator 418 is output as updated estimated load reaction torque $\hat{T}_m$, which is provided to the load position controller 206.

At multiplier 412, $\theta_{err}$ is combined with (e.g., multiplied by) second observer gain component Kob2. At multiplier 420 estimated motor speed $\hat{\omega}_m$ is combined with variable a_22. The output of multipliers 412 and 420 are added at adder 422.

At multiplier 424 estimated load reaction torque $\hat{T}_m$ is combined with (multiplied by) variable a_23. At multiplier 430, measured current $i_{q,meas}$ is combined with variable b_2. The output of multipliers 412 and 420 are added at adder 422. The output of multipliers 424, and 430 and adder 422 are added at adder 426. The output of adder 426 is integrated by integrator 428. The output of integrator 428 is output as updated estimated motor speed $\hat{\omega}_m$, which is provided to the load position controller 206.

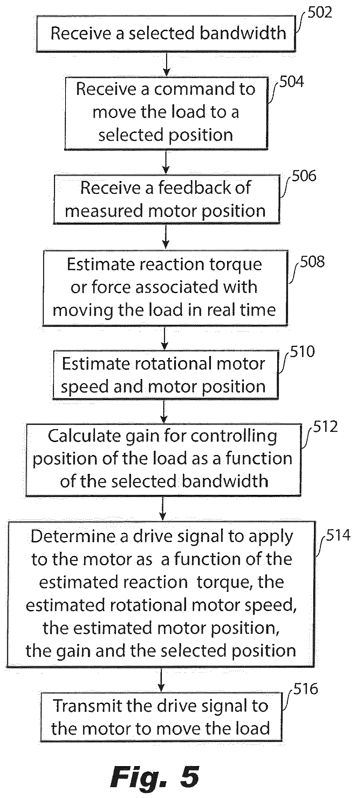

FIG. 5 shows an exemplary and non-limiting flowchart 500 illustrating a method for an actuator system for moving a load, in accordance with certain illustrated embodiments. The method can be performed by a controller of a motor, such as actuator controller 102 of motor 106 shown in FIGS. 1-2. Before turning to description of FIG. 5, it is noted that the flowchart in FIG. 5 shows an example in which operational steps are carried out in a particular order, as indicated by the lines connecting the blocks, but the various steps shown in this diagram can be performed in a different order, or in a different combination or sub-combination. It should be appreciated that in some embodiments some of the steps described below may be combined into a single step. In some embodiments, one or more additional steps may be included. In some embodiments, one or more of the steps can be omitted.

Operation 502 includes receiving a selected bandwidth, wherein bandwidth is related to the reciprocal of response time. The selected bandwidth can be fixed or can be variable during operation of the actuator system. Operation 504 includes receiving a command to move the load to a selected position. Operation 506 includes receiving a feedback of measured motor position. Operation 508 includes estimating reaction torque or force associated with moving the load in real time. In one or more embodiments, estimating the reaction torque or force can be an integration of a function of the third observer gain component and the difference between the measured motor position and previous estimated motor position.

Operation 510 includes estimating rotational motor speed and motor position. In one or more embodiments, estimating the motor position can be an integration of a function of the estimated rotational motor speed, the first observer gain component, and a difference between the measured motor position and the previous estimated motor position. In one or more embodiments, estimating the motor speed can be an integration of a function of the estimated rotational motor speed, the estimated reactive torque, the drive signal, the second observer gain component, and a difference between the measured motor position and the previous estimated motor position.

Operation 512 includes calculating gains for controlling position of the load as a function of the selected bandwidth. In one or more embodiments, the first gain component can be a function of the input bandwidth and the torque constant and the rotational inertia of the motor, the second gain component can be a function of the input bandwidth and damping factor, the viscous damping constant of the motor, the torque constant of the motor, and motor rotational inertia, and the third gain component can be a function of a torque constant of the motor.

Operation 514 includes determining a drive signal to apply to the motor as a function of the estimated reaction torque, the estimated rotational motor speed, the estimated motor position, the gain and the selected motor position. In one or more embodiments, determining the drive signal can include multiplying a difference between the selected motor position and the estimated motor position by a first gain component of the gain, multiplying the estimated rotational motor speed by a second gain component of the gain, and multiplying the estimated reactive torque by a third gain component of the gain.

Operation 516 includes transmitting the drive signal to the motor to move the load. In one or more embodiments, transmitting the drive signal can include transmitting the drive signal until an estimated position of the load based on the estimated motor position is within a threshold of the selected position.

Aspects of the present disclosure are described above with reference to block diagrams of methods, apparatus (systems) and computer program products according to embodiments of the disclosure. Features of the methods described include operations, such as equations, transformations, conversions, etc., that can be performed using software, hardware, and/or firmware. Regarding software implementations, it will be understood that individual blocks of the block diagram illustrations and combinations of blocks in the block diagram illustrations, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block diagram block or blocks.

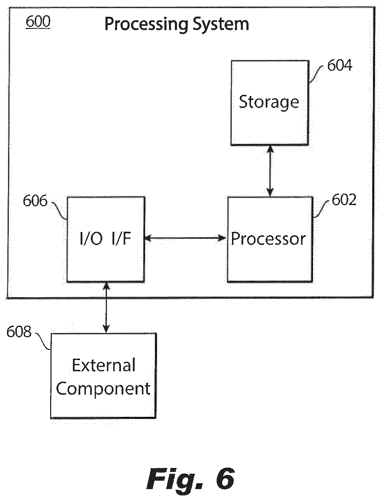

With reference to FIG. 6, a block diagram of an example computing system 600 is shown, which provides an

10

example configuration of the actuator controller 102 or one or more portions of the actuator controller 102. Computing system 600 is only one example of a suitable system and is not intended to suggest any limitation as to the scope of use or functionality of embodiments of the disclosure described herein. Computing system 600 can be implemented using hardware, software, and/or firmware. Regardless, computing system 600 is capable of being implemented and/or performing functionality as set forth in the disclosure.

Computing system 600 is shown in the form of a general-purpose computing device. Computing system 600 includes a processing device 602, memory 604, an input/output (I/O) interface (I/F) 606 that can communicate with an internal component 610, and optionally an external component 608.

The processing device 602 can include, for example, a PLOD, microprocessor, DSP, a microcontroller, an FPGA, an ASIC, and/or other discrete or integrated logic circuitry having similar processing capabilities.

The processing device 602 and the memory 604 can be included in components provided in the FPGA, ASIC, microcontroller, or microprocessor, for example. Memory 604 can include, for example, volatile and non-volatile memory for storing data temporarily or long term, and for storing programmable instructions executable by the processing device 602. I/O I/F 606 can include an interface and/or conductors to couple to the one or more internal components 608 and/or external components 610.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the block diagram block or blocks.

Embodiments of the actuator controller 102 (or portions of control circuit 102) may be implemented or executed by one or more computer systems, such as a microprocessor. Each computer system 600 can implement actuator controller 102, or multiple instances thereof. In various embodiments, computer system 600 may include one or more of a microprocessor, an FPGA, application specific integrated circuit (ASIC), microcontroller. The computer system 600 can be provided as an embedded device. All or portions of the computer system 600 can be provided externally, such by way of a mobile computing device, a smart phone, a desktop computer, a laptop, or the like.

Computer system 600 is only one example of a suitable system and is not intended to suggest any limitation as to the scope of use or functionality of embodiments of the disclosure described herein. Regardless, computer system 600 is capable of being implemented and/or performing any of the functionality set forth hereinabove.

Computer system 600 may be described in the general context of computer system-executable instructions, such as program modules, being executed by a computer system. Generally, program modules may include routines, programs, objects, components, logic, data structures, and so on that perform particular tasks or implement particular abstract data types.

While the disclosure has been described with reference to an exemplary embodiment(s), it will be understood by those skilled in the art that various changes may be made without departing from the examples of the disclosure. In addition, many modifications may be made to adapt a particular situation or material to the teachings of the disclosure without departing from the essential scope thereof. Therefore, it is intended that the disclosure not be limited to the particular embodiment(s) disclosed, but that the disclosure will include all embodiments falling within the scope of the appended claims.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the illustrated embodiments, exemplary methods and materials are now described. All publications mentioned herein disclose and describe the methods and/or materials in connection with which the publications are cited.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

While the apparatus and methods of the subject disclosure have been shown and described with reference to embodiments, those skilled in the art will readily appreciate that changes and/or modifications may be made thereto without departing from the examples of the subject disclosure.

# EP 3 793 081 B1

**Claims**

1. A method of controlling an actuator for moving a load, the method comprising:

   receiving (502) a selected bandwidth, wherein the bandwidth is defined as a frequency at which a gain of a closed loop input-output response is relative to a steady state value and is related to a reciprocal of response time;
   receiving (504) a command to move the load to a selected position;
   receiving (506) a feedback of a measured motor position;
   estimating (508) a reaction torque or force associated with moving the load in real time;
   estimating (510) a rotational motor speed and a motor position;
   calculating (512) controller gain for controlling a position of the load based on the selected bandwidth;
   determining (514) a drive signal to apply to the motor to move the load, wherein the drive signal is a function of the estimated reaction torque, the estimated rotational motor speed, the estimated motor position, the gain, and the selected position; and
   transmitting (516) the drive signal to the motor to move the load;
   wherein determining the drive signal includes multiplying a difference between the selected position and the estimated motor position by a first component of the gain, multiplying the estimated rotational motor speed by a second component of the gain, and multiplying the estimated reaction torque by a third component of the gain;
   the method **characterized by** the first component of the gain is a function of the selected bandwidth, motor inertia, and a torque constant of the motor,
   the second component of the gain is a function of a viscous damping constant of the motor, the torque constant of the motor, and the motor inertia, and/or
   the third component of the gain is a function of the torque constant of the motor.

2. The method of claim 1, wherein the selected bandwidth remains fixed during operation of the actuator.

3. The method of claim 1, wherein the selected bandwidth is variable during operation of the actuator.

4. The method of any preceding claim, wherein transmitting the drive signal includes transmitting the drive signal until an estimated position of the load based on the estimated motor position is within a threshold of the selected position.

5. The method of claim 1, wherein estimating the motor position is an integration of a function of the estimated rotational motor speed, a first observer gain component, and a difference between the measured motor position and a previous estimated motor position; and/or wherein estimating the rotational motor speed is an integration of a function of the estimated rotational motor speed, the estimated reaction torque, the drive signal, a second observer gain component, and a difference between the measured motor position and a previous estimated motor position; and/or wherein estimating the reaction torque of the motor is an integration of a function of a third observer gain component, and a difference between the measured motor position and a previous estimated motor position.

6. A controller (102) for an actuator for moving a load, the controller comprising:

   a memory (604) configured to store a plurality of programmable instructions; and
   a processing device (602) in communication with the memory, wherein the processing device, upon execution of the plurality of programmable instructions is configured to:

   receive (502) a selected bandwidth, wherein the bandwidth is defined as a frequency at which a gain of a closed loop input-output response is relative to a steady state value and is related to a reciprocal of response time to move the load;
   receive (504) a command to move the load to a selected position;
   receive (506) a feedback of a measured motor position;
   estimate (508) a reaction torque or force associated with moving the load in real time;
   estimate (510) a rotational motor speed and a motor position;
   calculate (512) gain for controlling a position of the load based on the selected bandwidth;
   determine (514) a drive signal to apply to the motor to move the load, wherein the drive signal is a function of the estimated reaction torque, the estimated rotational motor speed, the estimated motor position, the components of the position controller gain, and the selected position; and
   (516) transmit the drive signal to the motor to move the load;
   wherein determining the drive signal includes multiplying a difference between the selected position and the estimated motor position by a first component of the gain, multiplying the estimated rotational motor speed by a second component of the gain, and multiplying the estimated reaction torque by a third component of the gain; wherein,

the controller **characterized by** the first component of the gain is a function of the selected bandwidth, a motor inertia, and a torque constant of the motor,

the second component of the gain is a function of a viscous damping constant of the motor, the torque constant of the motor, and the motor inertia, and/or

the third component of the gain is a function of the torque constant of the motor.

7. The controller of claim 6, wherein the selected remains fixed during operation of the actuator; or wherein the selected bandwidth is variable during operation of the motor.

8. The controller of claims 6 or 7, wherein transmitting the drive signal includes transmitting the drive signal until an estimated position of the load based on the estimated motor position is within a threshold of the selected position.

9. The controller of any of claims 6-8, wherein estimating the motor position is an integration of a function of the estimated rotational motor speed, a first observer gain component, and a difference between the measured motor position and a previous estimated motor position; and/or wherein estimating the rotational motor speed is an integration of a function of the estimated rotational motor speed, the estimated reaction torque, the drive signal, a second observer gain component, and a difference between the measured motor position and a previous estimated motor position; and/or wherein estimating the reaction torque of the motor is an integration of a function of a third observer gain component, and a difference between the measured motor position and a previous estimated motor position.

10. The controller of claim 9, wherein estimating the reaction torque of the motor is an integration of a function of a third observer gain component, and a difference between the measured motor position and a previous estimated motor position.

11. A variable bandwidth actuator control system comprising the controller of any of claims 6-10.

**Patentansprüche**

1. Verfahren zum Steuern eines Aktuators zum Bewegen einer Last, wobei das Verfahren Folgendes umfasst:

Empfangen (502) einer ausgewählten Bandbreite, wobei die Bandbreite als eine Frequenz definiert ist, bei der eine Verstärkung einer Eingangs-/Ausgangsantwort eines geschlossenen Regelkreises relativ zu einem stationären Wert ist und mit einem Kehrwert der Antwortzeit in Beziehung steht;

Empfangen (504) eines Befehls zum Bewegen der Last an eine ausgewählte Position;

Empfangen (506) einer Rückmeldung einer gemessenen Motorposition;

Schätzen (508) eines Reaktionsdrehmoments oder einer Reaktionskraft im Zusammenhang mit der Bewegung der Last in Echtzeit;

Schätzen (510) einer Motordrehzahl und einer Motorposition;

Berechnen (512) der Steuerungsverstärkung zum Regeln einer Position der Last basierend auf der ausgewählten Bandbreite;

Bestimmen (514) eines Antriebssignals, das an den Motor angelegt wird, um die Last zu bewegen, wobei das Antriebssignal eine Funktion des geschätzten Reaktionsdrehmoments, der geschätzten Motordrehzahl, der geschätzten Motorposition, der Verstärkung und der ausgewählten Position ist; und

Übertragen (516) des Antriebssignals an den Motor zum Bewegen der Last;

wobei das Bestimmen des Antriebssignals das Multiplizieren einer Differenz zwischen der ausgewählten Position und der geschätzten Motorposition mit einer ersten Komponente der Verstärkung, das Multiplizieren der geschätzten Motordrehzahl mit einer zweiten Komponente der Verstärkung und das Multiplizieren des geschätzten Reaktionsdrehmoments mit einer dritten Komponente der Verstärkung umfasst;

das Verfahren **dadurch gekennzeichnet ist, dass** die erste Komponente der Verstärkung eine Funktion der gewählten Bandbreite, der Motorträgheit und einer Drehmomentkonstante des Motors ist,

die zweite Komponente der Verstärkung eine Funktion einer viskosen Dämpfungskonstante des Motors, der Drehmomentkonstante des Motors und der Motorträgheit ist, und/oder

die dritte Komponente der Verstärkung eine Funktion der Drehmomentkonstante des Motors ist.

**2.** Verfahren nach Anspruch 1, wobei die gewählte Bandbreite während des Betriebs des Aktuators fest bleibt.

**3.** Verfahren nach Anspruch 1, wobei die gewählte Bandbreite während des Betriebs des Aktuators variabel ist.

**4.** Verfahren nach einem der vorhergehenden Ansprüche, wobei das Übertragen des Antriebssignals das Übertragen des Antriebssignals umfasst, bis eine auf der geschätzten Motorposition basierende geschätzte Position der Last innerhalb eines Schwellenwerts der ausgewählten Position liegt.

**5.** Verfahren nach Anspruch 1, wobei das Schätzen der Motorposition eine Integration einer Funktion der geschätzten Motordrehzahl, einer ersten Beobachterverstärkungskomponente und einer Differenz zwischen der gemessenen Motorposition und einer vorherigen geschätzten Motorposition ist; und/oder wobei das Schätzen der Motordrehzahl eine Integration einer Funktion der geschätzten Motordrehzahl, des geschätzten Reaktionsdrehmoments, des Antriebssignals, einer zweiten Beobachterverstärkungskomponente und einer Differenz zwischen der gemessenen Motorposition und einer vorherigen geschätzten Motorposition ist; und/oder wobei das Schätzen des Reaktionsdrehmoments des Motors eine Integration einer Funktion einer dritten Beobachterverstärkungskomponente und einer Differenz zwischen der gemessenen Motorposition und einer vorherigen geschätzten Motorposition ist.

**6.** Eine Steuerung (102) für einen Aktuator zum Bewegen einer Last, wobei die Steuerung Folgendes umfasst:

einen Speicher (604), der zum Speichern einer Vielzahl von programmierbaren Anweisungen konfiguriert ist; und eine Verarbeitungsvorrichtung (602), die mit dem Speicher kommuniziert, wobei die Verarbeitungsvorrichtung bei Ausführung der Vielzahl von programmierbaren Anweisungen zu Folgendem konfiguriert ist:

Empfangen (502) einer ausgewählten Bandbreite, wobei die Bandbreite als eine Frequenz definiert ist, bei der eine Verstärkung einer Eingangs-/Ausgangsantwort eines geschlossenen Regelkreises relativ zu einem stationären Wert ist und mit einem Kehrwert der Antwortzeit zum Bewegen der Last in Beziehung steht;
Empfangen (504) eines Befehls zum Bewegen der Last an eine ausgewählte Position;
Empfangen (506) einer Rückmeldung einer gemessenen Motorposition;
Schätzen (508) eines Reaktionsdrehmoments oder einer Reaktionskraft im Zusammenhang mit der Bewegung der Last in Echtzeit;
Schätzen (510) einer Motordrehzahl und einer Motorposition;
Berechnen (512) der Verstärkung zum Regeln einer Position der Last basierend auf der ausgewählten Bandbreite;
Bestimmen (514) eines Antriebssignals, das an den Motor angelegt wird, um die Last zu bewegen, wobei das Antriebssignal eine Funktion des geschätzten Reaktionsdrehmoments, der geschätzten Motordrehzahl, der geschätzten Motorposition, der Komponenten der Positionsteuerungsverstärkung und der ausgewählten Position ist; und
Übertragen (516) des Antriebssignals an den Motor zum Bewegen der Last;
wobei das Bestimmen des Antriebssignals das Multiplizieren einer Differenz zwischen der ausgewählten Position und der geschätzten Motorposition mit einer ersten Komponente der Verstärkung, das Multiplizieren der geschätzten Motordrehzahl mit einer zweiten Komponente der Verstärkung und das Multiplizieren des geschätzten Reaktionsdrehmoments mit einer dritten Komponente der Verstärkung umfasst;
wobei,
die Steuerung **dadurch gekennzeichnet ist, dass** die erste Komponente der Verstärkung eine Funktion der gewählten Bandbreite, der Motorträgheit und einer Drehmomentkonstante des Motors ist,
die zweite Komponente der Verstärkung eine Funktion einer viskosen Dämpfungskonstante des Motors, der Drehmomentkonstante des Motors und der Motorträgheit ist, und/oder
die dritte Komponente der Verstärkung eine Funktion der Drehmomentkonstante des Motors ist.

**7.** Die Steuerung nach Anspruch 6, wobei die ausgewählte Bandbreite während des Betriebs des Aktuators fest bleibt; oder wobei die ausgewählte Bandbreite während des Betriebs des Motors variabel ist.

**8.** Die Steuerung nach Anspruch 6 oder 7, wobei das Übertragen des Antriebssignals das Übertragen des Antriebssignals umfasst, bis eine auf der geschätzten Motorposition basierende geschätzte Position der Last innerhalb eines Schwellenwerts der ausgewählten Position liegt.

**9.** Die Steuerung nach einem der Ansprüche 6-8, wobei das Schätzen der Motorposition eine Integration einer Funktion der geschätzten Motordrehzahl, einer ersten Beobachterverstärkungskomponente und einer Differenz zwischen der gemessenen Motorposition und einer vorherigen geschätzten Motorposition ist; und/oder wobei das Schätzen der Motordrehzahl eine Integration einer Funktion der geschätzten Motordrehzahl, des geschätzten Reaktionsdrehmoments, des Antriebssignals, einer zweiten Beobachterverstärkungskomponente und einer Differenz zwischen der gemessenen Motorposition und einer vorherigen geschätzten Motorposition ist; und/oder wobei das Schätzen des Reaktionsdrehmoments des Motors eine Integration einer Funktion einer dritten Beobachterverstärkungskomponente und einer Differenz zwischen der gemessenen Motorposition und einer vorherigen geschätzten Motorposition ist.

10. Der Controller nach Anspruch 9, wobei das Schätzen des Reaktionsdrehmoments des Motors eine Integration einer Funktion einer dritten Beobachterverstärkungskomponente und einer Differenz zwischen der gemessenen Motorposition und einer zuvor geschätzten Motorposition ist.

11. Ein Aktuator-Steuersystem mit variabler Bandbreite, das den Controller nach einem der Ansprüche 6 bis 10 umfasst.

## Revendications

1. Procédé de commande d'un actionneur destiné à déplacer une charge, le procédé comprenant :

   la réception (502) d'une bande passante sélectionnée, dans lequel la bande passante est définie comme une fréquence à laquelle un gain d'une réponse d'entrée-sortie en boucle fermée est relatif à une valeur à l'état stable et est lié à une réciproque du temps de réponse ;
   la réception (504) d'une commande pour déplacer la charge vers une position sélectionnée ;
   la réception (506) d'un retour d'information d'une position de moteur mesurée ;
   l'estimation (508) d'un couple ou d'une force de réaction associé au déplacement de la charge en temps réel ;
   l'estimation (510) d'une vitesse de rotation du moteur et d'une position du moteur ;
   le calcul(512) le gain du dispositif de commande pour commander une position de la charge sur la base de la bande passante sélectionnée ;
   la détermination (514) d'un signal d'entraînement à appliquer au moteur pour déplacer la charge, dans lequel le signal d'entraînement est une fonction du couple de réaction estimé, de la vitesse de rotation estimée du moteur, de la position estimée du moteur, du gain et de la position sélectionnée ; et la transmission (516) du signal d'entraînement au moteur pour déplacer la charge ;
   dans lequel la détermination du signal d'entraînement comporte la multiplication d'une différence entre la position sélectionnée et la position estimée du moteur par une première composante du gain, la multiplication de la vitesse de rotation estimée du moteur par une deuxième composante du gain, et la multiplication du couple de réaction estimé par une troisième composante du gain ;
   le procédé **caractérisée par le fait que** la première composante du gain est une fonction de la bande passante sélectionnée, de l'inertie du moteur et d'une constante de couple du moteur,
   la deuxième composante du gain est une fonction d'une constante d'amortissement visqueux du moteur, de la constante de couple du moteur et de l'inertie du moteur, et/ou
   la troisième composante du gain est une fonction de la constante de couple du moteur.

2. Procédé selon la revendication 1, dans lequel la bande passante sélectionnée reste fixe pendant le fonctionnement de l'actionneur.

3. Procédé selon la revendication 1, dans lequel la bande passante sélectionnée est variable pendant le fonctionnement de l'actionneur.

4. Procédé selon une quelconque revendication précédente, dans lequel la transmission du signal d'entraînement comporte la transmission du signal d'entraînement jusqu'à ce qu'une position estimée de la charge basée sur la position estimée du moteur soit dans un seuil de la position sélectionnée.

5. Procédé selon la revendication 1, dans lequel l'estimation de la position du moteur est une intégration d'une fonction de la vitesse de rotation estimée du moteur, d'une première composante de gain d'observateur et d'une différence entre la position mesurée du moteur et d'une position estimée antérieure du moteur ; et/ou dans lequel l'estimation de la vitesse de rotation du moteur est une intégration d'une fonction de la vitesse de rotation estimée du moteur, du couple de réaction estimé, du signal d'entraînement, d'une deuxième composante de gain d'observateur et d'une différence entre la position mesurée du moteur et une position estimée antérieure du moteur ; et/ou dans lequel l'estimation du couple de réaction du moteur est une intégration d'une fonction d'une troisième composante de gain d'observateur et d'une différence entre la position mesurée du moteur et une position estimée antérieure du moteur.

6. dispositif de commande (102) pour un actionneur destiné à déplacer une charge, le dispositif de commande comprenant :

une mémoire (604) configurée pour stocker une pluralité d'instructions programmables ; et
un dispositif de traitement (602) en communication avec la mémoire, dans lequel le dispositif de traitement, lors de l'exécution de la pluralité d'instructions programmables, est configuré pour :

recevoir (502) une bande passante sélectionnée, dans lequel la bande passante est définie comme une fréquence à laquelle un gain d'une réponse d'entrée-sortie en boucle fermée est relatif à une valeur à l'état stable et est lié à une réciproque du temps de réponse pour déplacer la charge ;
recevoir (504) une commande pour déplacer la charge vers une position sélectionnée ;
recevoir (506) d'un retour d'information d'une position de moteur mesurée ;
estimer (508) un couple ou une force de réaction associé au déplacement de la charge en temps réel ;
estimer (510) d'une vitesse de rotation du moteur et une position du moteur ;
calculer (512) le gain de la commande d'une position de la charge sur la base de la bande passante sélectionnée ;
déterminer (514) un signal d'entraînement à appliquer au moteur pour déplacer la charge, dans lequel le signal d'entraînement est une fonction du couple de réaction estimé, de la vitesse de rotation estimée du moteur, des composantes du gain du dispositif de commande de position et de la position sélectionnée ; et
transmettre (516) le signal d'entraînement au moteur pour déplacer la charge ;
dans lequel la détermination du signal d'entraînement comporte la multiplication d'une différence entre la position sélectionnée et la position estimée du moteur par une première composante du gain, la multiplication de la vitesse de rotation estimée du moteur par une deuxième composante du gain, et la multiplication du couple de réaction estimé par une troisième composante du gain ;
dans lequel ,
le dispositif de commande **caractérisée par le fait que** la première composante du gain est une fonction de la bande passante sélectionnée, de l'inertie du moteur et d'une constante de couple du moteur,
la deuxième composante du gain est une fonction d'une constante d'amortissement visqueux du moteur, de la constante de couple du moteur et de l'inertie du moteur, et/ou
la troisième composante du gain est une fonction de la constante de couple du moteur.

7. Dispositif de commande selon la revendication 6, dans lequel la sélection reste fixe pendant le fonctionnement de l'actionneur ou dans lequel la bande passante sélectionnée est variable pendant le fonctionnement du moteur.

8. Dispositif de commande selon les revendications 6 ou 7, dans lequel la transmission du signal d'entraînement comporte la transmission du signal d'entraînement jusqu'à ce qu'une position estimée de la charge basée sur la position estimée du moteur soit dans un seuil de la position sélectionnée.

9. Procédé selon l'une quelconque des revendications 6 à 8, dans lequel l'estimation de la position du moteur est une intégration d'une fonction de la vitesse de rotation estimée du moteur, d'une première composante de gain d'observateur et d'une différence entre la position mesurée du moteur et d'une position estimée antérieure du moteur ; et/ou dans lequel l'estimation de la vitesse de rotation du moteur est une intégration d'une fonction de la vitesse de rotation estimée du moteur, du couple de réaction estimé, du signal d'entraînement, d'une deuxième composante de gain d'observateur et d'une différence entre la position mesurée du moteur et une position estimée antérieure du moteur ; et/ou dans lequel l'estimation du couple de réaction du moteur est une intégration d'une fonction d'une troisième composante de gain d'observateur et d'une différence entre la position mesurée du moteur et une position estimée antérieure du moteur.

10. Dispositif de commande selon la revendication 9, dans lequel l'estimation du couple de réaction du moteur est une intégration d'une fonction d'un troisième composant de gain d'observateur, et d'une différence entre la position mesurée du moteur et une position estimée antérieure du moteur.

11. Actionneur à bande passante variable comprenant le dispositif de commande selon l'une quelconque des revendications 6 à 10.

**Fig. 1**

**Actuator Controller** $\underline{102}$

Voltage Cmds $v_a, v_b, v_c$

Current Feedbacks $i_a, i_b, i_c$

Motor Position Feedback $\theta_m$

**Inner Loop Motor Controller** $\underline{252}$

Motor Controller Interface — 210

Current Monitor Interface — 212

Current Loop Controllers — 208

$v_q^{ref}$, $v_d^{ref}$

$\hat{\theta}_m$

$i_q$, $i_d$

$i_q^{ref}$, $i_d^{ref}$

$\hat{\theta}_m$

**Outer Loop Load Controller** $\underline{250}$

Gain Computations Unit — 202

$K_C, Lim_C$

Load Position Controller — 206

High Gain Observer — 204

$\hat{\theta}_m, \hat{\omega}_m, \hat{T}_m$

Load Controller Bandwidth $\Omega_C$

Load Position Command $\theta^{ref}_{load}$

Load Position, Rate Feedbacks $\hat{\theta}_{load}, \hat{\omega}_{load}$

***Fig. 2***

18

**Fig. 3**

**Fig. 4**

Receive a selected bandwidth — 502

Receive a command to
move the load to a
selected position — 504

Receive a feedback of
measured motor position — 506

Estimate reaction torque
or force associated with
moving the load in real time — 508

Estimate rotational motor
speed and motor position — 510

Calculate gain for controlling
position of the load as a function
of the selected bandwidth — 512

Determine a drive signal to apply
to the motor as a function of the
estimated reaction torque, the
estimated rotational motor speed,
the estimated motor position,
the gain and the selected position — 514

Transmit the drive signal to
the motor to move the load — 516

*Fig. 5*

**Fig. 6**

**EP 3 793 081 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018262144 A
- US 2019229653 A

- US 2016134213 A